# EUROPEAN PATENT SPECIFICATION

(11) **EP 2 851 050 B1**
(45) Date of publication and mention of the grant of the patent: **03.08.2016**
(21) Application number: 13185726.0
(22) Date of filing: 24.09.2013
(51) Int. Cl.: A61G 5/04, A61G 5/10, B62D 7/08

(54) **Wheelchair with progressive blocking of the steering mechanism**
Rollstuhl mit progressiver Blockierung des Lenkungsmechanismus
Fauteuil roulant avec blocage progressif du mécanisme de direction

(43) Date of publication of application: 25.03.2015
(73) Proprietor: 4 Power 4 SPRL, 1040 Etterbeek (BE)
(72) Inventor: Porcheron, François, 1040 Etterbeek (BE)
(74) Representative: Thibault, Jean-Marc

(56) References cited:
- DE-A1- 3 209 315
- US-A- 5 145 196

## Description

### Field of the invention

The present invention is related to wheelchairs for handicapped persons, in particular to wheelchairs capable of moving over uneven terrain.

### State of the art.

Not many wheelchairs are on the market today that are adapted to rough terrain. The few types that do exist are often provided with rugged tyres and separate electrical motors for each of the four wheels. However, on very uneven terrain, such vehicles are in danger of becoming unsteerable.

Certain types of wheelchairs are provided with means to block the steering mechanism temporarily while engaging very uneven terrain, and releasing the steering again when the terrain becomes more even. However, such mechanisms are operating in an on/off manner, eliminating any steering capacity when the steering is blocked, which is a serious limit to the manoeuvrability of the chair.

US 5,145,196 discloses a wheelchair with a skeering mechanism and means to prevent oversteering. DE 32 09 315 A1 discloses a wheelchair with means to block the steering of the front wheels.

### Summary of the invention

The invention proposes a wheelchair provided with a steering mechanism that does not suffer from the drawbacks described above. The wheelchair according to the invention is described in the appended claims.

The present invention is related to a wheelchair provided with a steering mechanism that can be progressively blocked or released. The wheelchair is equipped with a powered device (in other words a drive means), for example a variable length actuator, configured to actuate the movement of a protruding movable member able to engage with a receptacle attached to the steering mechanism. The steering angle is diminished progressively as the moveable member is further introduced into the receptacle, and when the member is retracted, the steering angle is again progressively increased. The shape of the moveable member and the inner surface of the receptacle is such that when the member is introduced into the receptacle, the steering action causes the member and said inner surface to come into contact, at which moment the protruding member obstructs the steering action, thereby limiting the available steering angle. The degree to which the steering angle is limited is higher as the member enters further into the receptacle. According to a preferred embodiment, full blockage of the steering mechanism is reached when the member is fully extended.

The invention is thus in particular related to a wheelchair provided with a frame and a steering mechanism for allowing steering over a steering angle, and comprising:
- a protruding member, said member being moveable with respect to the frame, between a fully extended and a fully retracted position,
- a powered device (may also be referred to as a drive means) for moving the protruding member between the fully extended and the fully retracted position,
- a receptacle attached to the steering mechanism, and configured to receive said protruding member when said member is extended, so that the protruding member obstructs the steering action when the inner surface of the receptacle comes into contact with said member, and wherein
   - the steering angle is progressively diminished as the protruding member is introduced into the receptacle,
   - the steering angle is progressively increased as the protruding member is retracted from the receptacle.

According to an embodiment, said powered device is a variable length actuator. The protruding member may be oriented horizontally or vertically with respect to the frame. Other orientations are also possible.

According to an embodiment, said powered device is a levelling actuator for levelling the occupant of the wheelchair when the chair is on a sloped surface.

According to an embodiment, the wheelchair comprises two steerable front wheels and two rear wheels, and the steering mechanism comprises a steering plate that is pivotable about a vertical axis, and that is coupled to said front wheels via tie rods and actuator brackets, so that a rotation of the steering plate is translated into a simultaneous rotation of the front wheels, wherein said receptacle is attached to said steering plate.

In the latter embodiment, the receptacle may be formed by a pair of platelets fixed to the steering plate and placed in V-shape with the hollow side of the V facing the actuator.

According to an embodiment, the fully extended position of the moveable member causes the complete blockage of the steering mechanism.

A wheelchair according to the invention may further comprise a gas cylinder mounted between the steering mechanism and the frame.

### Brief description of the figures

Figure 1 illustrates a top view of a wheelchair according to the invention, when the steering is not blocked, and the front wheels are oriented straight forward.
Figure 2 illustrates the wheelchair, still with the steering unblocked, and with the front wheels pivoted over a certain angle.
Figure 3 illustrates the wheelchair, when the front wheels are fully blocked. No steering is possible.
Figure 4 illustrates the wheelchair, when the front wheels are partially blocked. A limited steering angle is still available.
Figure 5 shows an embodiment further provided with a gas cylinder for controlling the steering mechanism during reverse movement of the wheelchair.

### Detailed description of the invention

The parts of the wheelchair that are necessary to understand the invention are indicated in the appended drawings, which show top views of the chair's chassis and four wheels, according to a preferred embodiment. The wheels are mounted on a frame 1. The two rear wheels 2 and 3 are driven by independent electrical motors 4 and 5 respectively. The rear wheels are not independently steerable. A central support plate 6 is provided for carrying batteries (not shown). The front wheels 10 and 11 are equally driven by separate electrical motors 12 and 13 respectively. They are furthermore coupled to a steering mechanism comprising a pivotable steering plate 14, pivotable about a vertical axis 15, and connected through tie rods 16 and 17 to actuating brackets 18 and 19 which are fixed to the respective front wheels 10/11. The front wheels are furthermore rotatable about vertical axes 20 and 21. Steering is accomplished by rotating the steering plate 14, thereby actuating, via the tie rods 16/17, a rotation of the brackets 18/19 and thereby of the front wheels 10/11 about their respective axes 20/21, to thereby enable the steering action. Dampeners 22/23 for the front wheels are equally visible. A levelling actuator 24 is equally shown, configured to maintain the occupant's seat horizontal when the wheelchair moves on an upward or downward slope.

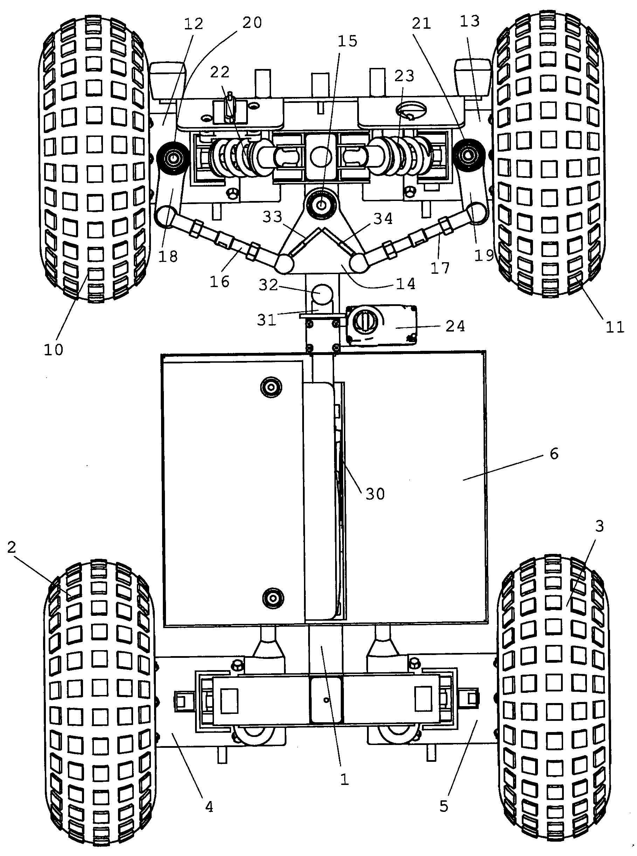

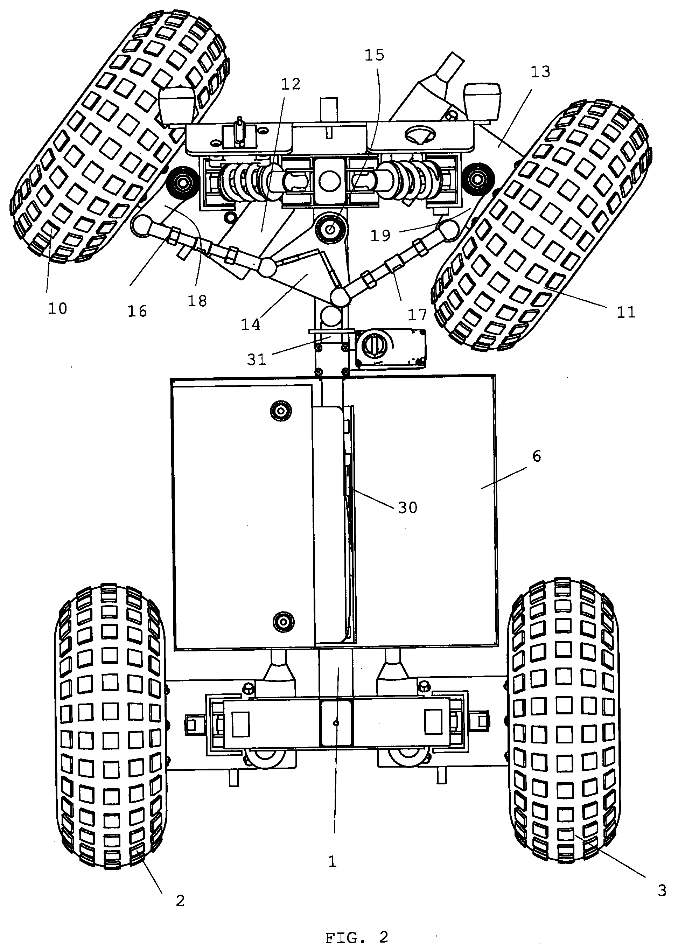

Characteristic to the invention, the wheelchair is provided with a means for blocking the steering mechanism of the front wheels 10/11 in a progressive manner. A variable length actuator 30 is mounted centrally on the frame 1. This may be any suitable type of actuator, preferably an electrical actuator. Actuation of the actuator is controlled by the chair's occupant, and takes place in the form of a forward or backward motion of the movable beam 31 of the actuator, which is preferably provided with a rounded shape 32 at its distal end. Figures 1 and 2 show the fully retracted position of the actuator 30, allowing full use of the steering mechanism described above.

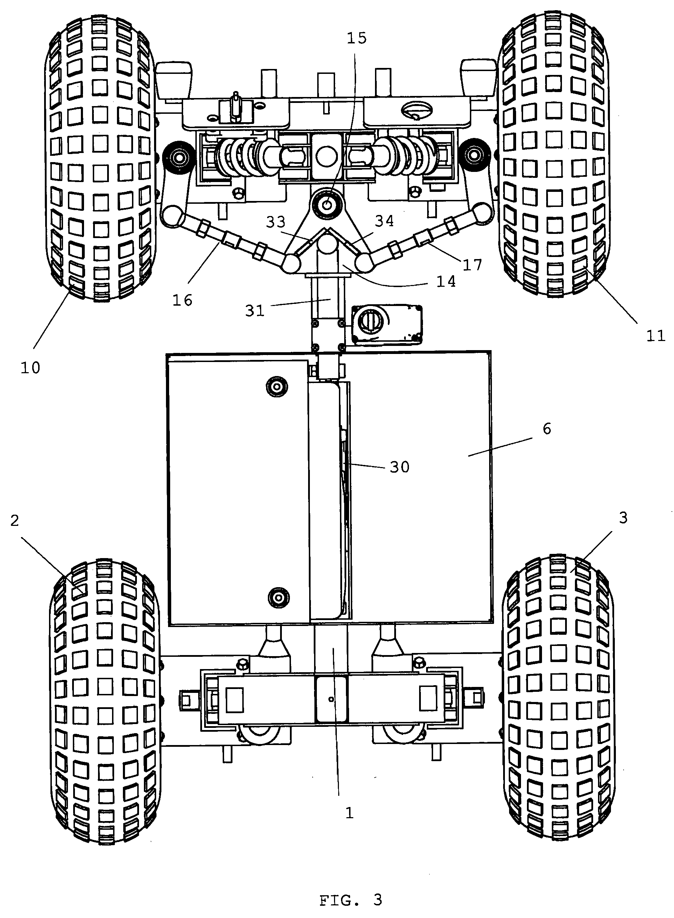

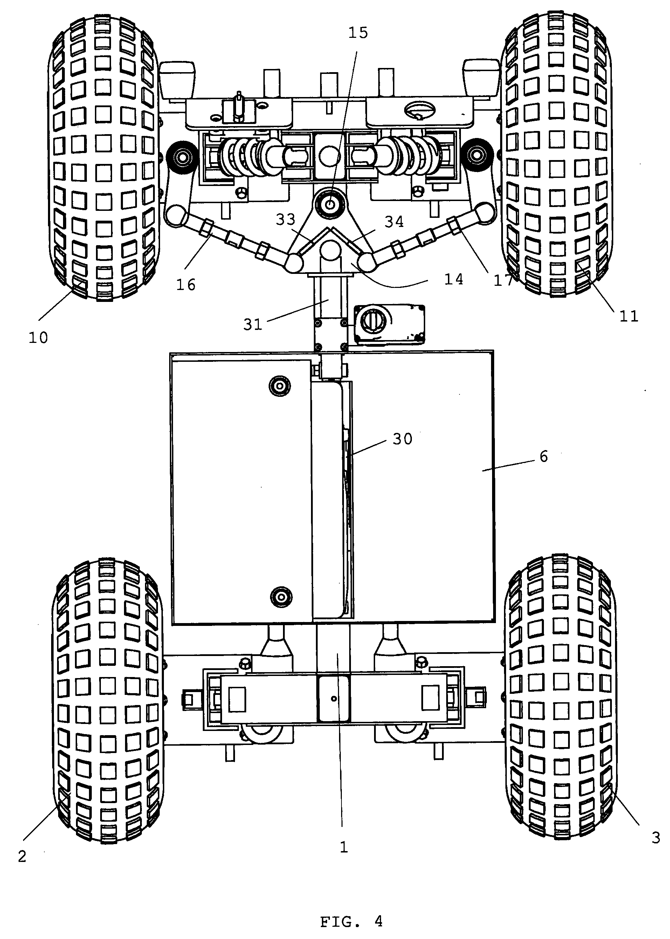

As seen in Figures 1 and 2, the steering plate 14 is provided with two vertical platelets 33 and 34, fixed, e.g. welded to the plate, and placed in a V-shape, so as to form a receptacle facing the distal end 32 of the actuator's movable beam 31 and configured to envelop said distal end when the beam is extended. The full extension of the beam 31 when the front wheels are oriented straight forward causes complete blockage of the steering mechanism, as illustrated in Figure 3. When the beam 31 is extended partially, the steering mechanism is not fully blocked, but a limited steering angle is still available, as illustrated in Figure 4. In this condition, steering left or right is only possible until one of the platelets forming the inner surface of the receptacle comes into contact with the distal end 32 of the protruding member 31, at which moment this member obstructs further steering in the direction in question. Steering in the other direction is obstructed in the same way by the other platelet.

The degree to which the steering is obstructed is determined by the position of the distal end 32 of the member 31 with respect to the platelets 33/34. The further the member is extended into the receptacle formed by these platelets, the more the steering angle is limited, and vice versa : the more the member is extracted from the receptacle, the more the steering is again released. The steering can thus be blocked or released progressively by controlling the actuator 30. This capability of partially blocking or unblocking the steering mechanism in a progressive manner represents an advantage over existing systems where the steering is either released or blocked in an on/off manner.

The invention is not limited to the embodiment shown in the drawings and described above. The steering mechanism as such may differ from the one shown in Figures 1 and 2, as long as it comprises a moveable member to which the receptacle may be attached so that the operation of the actuator and the receptacle may progressively block or release the steering in the above-described way. The receptacle may have the shape of any hollow member that is suitable for this purpose, for example a hollow sphere or pyramid, attached on top of the steering plate 14.

The variable length actuator 30 is just one example of a powered device for moving the protruding member 31 configured to engage with the receptacle formed by the platelets 33/34. Any other suitable device could be used for this purpose, for example a hydraulic actuator, a worm drive, etc.

The protruding member 31 need not be oriented horizontally, but it may be vertical or have any other orientation, provided that the steering mechanism and the receptacle are adapted to the actuator's orientation. The actuator 30 in the embodiment of figure 1 could for example be mounted vertically, above or below the steering plate 14, with the V-shaped receptacle mounted on the steering plate but with the opening of the V oriented upwards or downwards.

The protruding member 31 need not be a part of the powered device as such, as in the case of Figure 1, where the member 31 is the moveable beam of the electrical actuator 30. In other embodiments, the protruding member may be mounted on any suitable part of the wheelchair with the receptacle mounted on a suitable part of the steering mechanism or vice versa, while the powered device moves said wheelchair part so as to engage or disengage the member and the receptacle.

For example, if the protruding member is oriented vertically (or at least upright) above or below the receptacle, the levelling actuator 24 (see Figure 1) could play the part of the powered device for moving the protruding member towards and from the receptacle. The protruding member is then not mounted directly onto the actuator 24, but it could be mounted for example on the underside of the occupant's seat, pointing downward, with the receptacle mounted on the steering plate 14 (in case a steering mechanism is used as shown in Figure 1), and with the opening of the V directed upwards. During normal operation, the actuator 24 is extended over a minimal distance, so that the protruding member is not engaged in the receptacle and the steering is unblocked. Progressively blocking of the steering mechanism is established by lowering the actuator 24 below said minimal distance, thereby introducing the member into the receptacle.

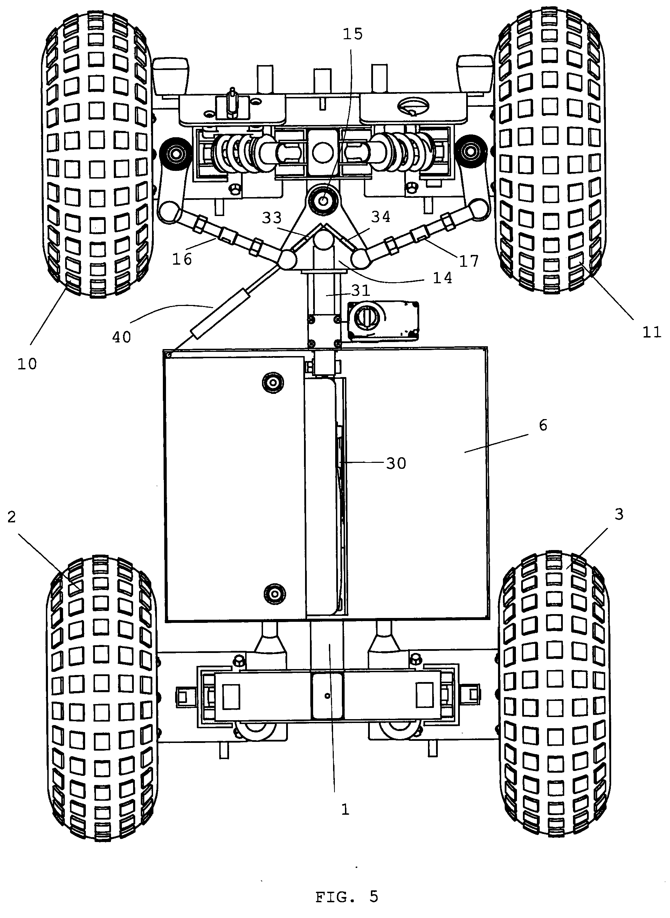

In the embodiment of Figures 1 to 4, reliable blocking of the front wheels is not ensured when the wheelchair moves rearwards. For this reason, a dampener 40 may be mounted between the steering plate 14 and the frame 1, as shown in the embodiment of Figure 5. This dampener may be a gas cylinder for example. Its purpose is to limit any uncontrollable movements of the wheels when the chair is moving in reverse.

The blocking mechanism of the invention is applicable to any steering mechanism known in the art. For example if the rear wheels 2 and 3 are steerable instead of or together with the front wheels, the steering mechanism of these rear wheels may also be provided with the actuator/receptacle mechanism as described above. When the two front wheels and/or the two rear wheels are separately steerable, separate blocking mechanisms can be mounted onto the steering mechanisms of one or more of the wheels (i.e. one actuator/receptacle combination on each steerable wheel).

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention. In the claims, the word "comprising" does not exclude other elements or steps, and the indefinite article "a" or "an" does not exclude a plurality. Any reference signs in the claims should not be construed as limiting the scope.

## Claims

1. A wheelchair provided with a frame (1) and a steering mechanism for allowing steering over a steering angle, and comprising :
• a protruding member (31), said member being moveable with respect to the frame (1), between a fully extended and a fully retracted position,
• a powered device for moving the protruding member (31) between the fully extended and the fully retracted position,
• a receptacle (33,34) attached to the steering mechanism, and configured to receive said protruding member (31) when said member is extended, so that the protruding member obstructs the steering action when the inner surface of the receptacle comes into contact with said member, and wherein
• the steering angle is progressively diminished as the protruding member (31) is introduced into the receptacle (33,34),
• the steering angle is progressively increased as the protruding member (31) is retracted from the receptacle (33,34).

2. Wheelchair according to claim 1, wherein said powered device is a variable length actuator (30).

3. Wheelchair according to claim 1 or 2, wherein said protruding member (31) is oriented horizontally with respect to the frame (1).

4. Wheelchair according to claim 1 or 2, wherein said protruding member (31) is oriented vertically with respect to the frame (1).

5. Wheelchair according to claim 1, wherein said powered device is a levelling actuator (24) for levelling the occupant of the wheelchair when the chair is on a sloped surface.

6. Wheelchair according to any one of the preceding claims, comprising two steerable front wheels (10,11) and two rear wheels (2,3), and wherein said steering mechanism comprises a steering plate (14) that is pivotable about a vertical axis (15), and that is coupled to said front wheels via tie rods (16,17) and actuator brackets (18,19), so that a rotation of the steering plate (14) is translated into a simultaneous rotation of the front wheels (10,11), and wherein said receptacle (33,34) is attached to said steering plate (14).

7. Wheelchair according to claim 6, wherein the receptacle is formed by a pair of platelets (33,34) fixed to the steering plate (14) and placed in V-shape with the hollow side of the V facing the actuator (30).

8. Wheelchair according to any one of the preceding claims, wherein the fully extended position of the moveable member (31) causes the complete blockage of the steering mechanism.

9. Wheelchair according to any one of the preceding claims, further comprising a gas cylinder (40) mounted between the steering mechanism and the frame (1).

## Patentansprüche

1. Rollstuhl, bereitgestellt mit einem Rahmen (1) und einem Lenkungsmechanismus, um ein Lenken über einen Lenkungswinkel zu ermöglichen, und umfassend:
• ein hervorstehendes Bauteil (31), wobei das Bauteil in Bezug auf den Rahmen (1) zwischen einer vollständig ausgefahrenen und einer vollständig eingezogenen Position beweglich ist,
• eine angetriebene Vorrichtung zum Bewegen des hervorstehenden Bauteils (31) zwischen der vollständig ausgefahrenen und der vollständig eingezogenen Position,
• eine Aufnahme (33, 34), befestigt am Lenkungsmechanismus und dazu ausgelegt, das hervorstehende Bauteil (31) aufzunehmen, wenn das Bauteil ausgefahren ist, so dass das hervorstehende Bauteil die Lenkungsbewegung sperrt, wenn die Innenfläche der Aufnahme mit dem Bauteil in Berührung kommt, und wobei
• der Lenkungswinkel progressiv vermindert wird, wenn das hervorstehende Bauteil (31) in die Aufnahme (33, 34) eingeführt wird,
• der Lenkungswinkel progressiv erhöht wird, wenn das hervorstehende Bauteil (31) von der Aufnahme (33, 34) eingezogen wird.

2. Rollstuhl nach Anspruch 1, wobei die angetriebene Vorrichtung ein Aktor variabler Länge (30) ist.

3. Rollstuhl nach Anspruch 1 oder 2, wobei das hervorstehende Bauteil (31) in Bezug auf den Rahmen (1) horizontal ausgerichtet ist.

4. Rollstuhl nach Anspruch 1 oder 2, wobei das hervorstehende Bauteil (31) in Bezug auf den Rahmen (1) vertikal ausgerichtet ist.

5. Rollstuhl nach Anspruch 1, wobei die angetriebene Vorrichtung ein Nivellierungsaktor (24) zum Nivellieren des Insassen des Rollstuhls ist, wenn der Stuhl auf einer schrägen Fläche ist.

6. Rollstuhl nach einem der vorangehenden Ansprüche, umfassend zwei lenkbare Vorderräder (10, 11) und zwei Hinterräder (2, 3), und wobei der Lenkungsmechanismus eine Lenkungsplatte (14) umfasst, welche um eine vertikale Achse (15) schwenkbar ist und welche an die Vorderräder mittels Spurstangen (16, 17) und Aktorhalterungen (18, 19) gekoppelt ist, sodass eine Drehung der Lenkungsplatte (14) in eine simultane Drehung der Vorderräder (10, 11) übersetzt ist, und wobei die Aufnahme (33, 34) an der Lenkungsplatte (14) befestigt ist.

7. Rollstuhl nach Anspruch 6, wobei die Aufnahme durch ein Paar von Plättchen (33, 34) gebildet ist, welche an der Lenkungsplatte (14) fixiert und in V-Form platziert sind, wobei die hohle Seite des Vs dem Aktor (30) zugewandt ist.

8. Rollstuhl nach einem der vorangehenden Ansprüche, wobei die vollständig ausgefahrene Position des beweglichen Bauteils (31) die komplette Blockierung des Lenkungsmechanismus verursacht.

9. Rollstuhl nach einem der vorangehenden Ansprüche, ferner umfassend einen Gaszylinder (40), welcher zwischen dem Lenkungsmechanismus und dem Rahmen (1) montiert ist.

## Revendications

1. Fauteuil roulant prévu avec un bâti (1) et un mécanisme de direction pour permettre la direction sur un angle de braquage et comprenant :
• un élément en saillie (31), ledit élément étant mobile par rapport au bâti (1), entre une position complètement étendue et une position complètement rétractée,
• un dispositif électrique pour déplacer l'élément en saillie (31) entre la position complètement étendue et la position complètement rétractée,
• un réceptacle (33, 34) fixé au mécanisme de direction, et configuré pour recevoir ledit élément en saillie (31) lorsque ledit élément est étendu, de sorte que l'élément en saillie empêche l'action de direction lorsque la surface interne du réceptacle vient en contact avec ledit élément, et dans lequel
• l'angle de braquage est progressivement diminué au fur et à mesure que l'élément en saillie (31) est introduit dans le réceptacle (33, 34),
• l'angle de braquage est progressivement augmenté au fur et à mesure que l'élément en saillie (31) est rétracté du réceptacle (33, 34).

2. Fauteuil roulant selon la revendication 1, dans lequel ledit dispositif électrique est un actionneur à longueur variable (30).

3. Fauteuil roulant selon la revendication 1 ou 2, dans lequel ledit élément en saillie (31) est orienté horizontalement par rapport au bâti (1).

4. Fauteuil roulant selon la revendication 1 ou 2, dans lequel ledit élément en saillie (31) est orienté verticalement par rapport au bâti (1).

5. Fauteuil roulant selon la revendication 1, dans lequel ledit dispositif électrique est un actionneur de maintien à niveau (24) pour maintenir l'occupant du fauteuil roulant à niveau lorsque le fauteuil est sur une surface inclinée.

6. Fauteuil roulant selon l'une quelconque des revendications précédentes, comprenant deux roues avant dirigeables (10, 11) et deux roues arrière (2, 3), et dans lequel ledit mécanisme de direction comprend une plaque de direction (14) qui peut pivoter autour d'un axe vertical (15) et qui est couplé auxdites roues avant via des biellettes de direction (16, 17) et des supports d'actionneur (18, 19), de sorte qu'une rotation de la plaque de direction (14) est translatée en une rotation simultanée des roues avant (10, 11) et dans lequel ledit réceptacle (33, 34) est fixé à ladite plaque de direction (14).

7. Fauteuil roulant selon la revendication 6, dans lequel le réceptacle est formé par une paire de lamelles (33, 34) fixées à la plaque de direction (14) et placées en forme de V avec le côté creux du V qui fait face à l'actionneur (30).

8. Fauteuil roulant selon l'une quelconque des revendications précédentes, dans lequel la position complètement étendue de l'élément mobile (31) provoque le blocage complet du mécanisme de direction.

9. Fauteuil roulant selon l'une quelconque des revendications précédentes, comprenant en outre un cylindre de gaz (40) monté entre le mécanisme de direction et le bâti (1).
